# EUROPÄISCHE PATENTSCHRIFT

(11) **EP 2 804 730 B1**
(45) Veröffentlichungstag und Bekanntmachung des Hinweises auf die Patenterteilung: **27.06.2018**
(21) Anmeldenummer: 13700731.6
(22) Anmeldetag: 18.01.2013
(51) Int. Cl.: B29B 11/16, B29C 33/30

(54) **VERFAHREN UND VORRICHTUNG ZUR HERSTELLUNG EINES DREIDIMENSIONALEN VORFORMLINGS IM ZUGE DER HERSTELLUNG VON FASERVERSTÄRKTEN FORMTEILEN**
METHOD AND DEVICE FOR PRODUCING A THREE-DIMENSIONAL PREFORM IN THE COURSE OF THE PRODUCTION OF FIBER-REINFORCED MOLDED PARTS
PROCÉDÉ ET DISPOSITIF POUR PRODUIRE UNE PRÉFORME TRIDIMENSIONNELLE LORS DE LA PRODUCTION DE PIÈCES MOULÉES RENFORCÉES PAR DES FIBRES

(30) Priorität: 18.01.2012 DE 102012200697
(43) Veröffentlichungstag der Anmeldung: 26.11.2014
(73) Patentinhaber: Dieffenbacher GmbH Maschinen- und Anlagenbau, 75031 Eppingen (DE)
(72) Erfinder: LANDAUF, Helmut, 75038 Oberderdingen (DE)
(86) Internationale Anmeldenummer: PCT/EP2013/050909
(87) Internationale Veröffentlichungsnummer: WO 2013/107847

(56) Entgegenhaltungen:
- DE-A1- 2 701 480
- RUDD C D ED - MIRACLE & S L DONALDSON D B: "Resin transfer molding and structural reaction injection molding", 1. Dezember 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 492 - 500, XP002676513, ISBN: 978-0-87170-703-1 Abbildung 1

## Beschreibung

Die Erfindung betrifft ein Verfahren zur Herstellung eines dreidimensionalen Vorformlings im Zuge der Herstellung von faserverstärkten Formteilen nach dem Oberbegriff des Patentanspruchs 1, eine Vorrichtung zur Herstellung eines dreidimensionalen Vorformlings im Zuge der Herstellung von faserverstärkten Formteilen nach dem Oberbegriff des Patentanspruchs 5.

Im Zuge der Herstellung von faserverstärkten Kunststoffbauteilen, auch Faserverbundbauteile genannt, ist insbesondere als industrielle Verwendung das RTM-Verfahren, Resin-Transfer-Moulding-Verfahren, gängige Praxis. Der gesamte Herstellungsprozess bis zu einem verwendungsfähigen Kunststoffbauteil besteht aus mehreren nachfolgend ablaufenden Einzelprozessen. In einem ersten Verfahrensschritt werden endkonturnahe Vorformlinge/Faserhalbzeuge hergestellt. In diesem Preform-Prozess werden in der Regel mehrere Lagen Gewebe oder Fasergelege, üblicherweise in zweidimensionaler Form, gestapelt oder ggf. gefügt (Nähen, Verschweißen, Kleben), so dass der Fasergewebestapel im Wesentlichen bereits die notwendigen äußeren Konturen und teilweise auch bereits besondere Schichten oder Schichtdicken aufweist. Vorzugsweise wird ein Binder in die Trennebenen der Gelege eingebracht, der nach Erreichen einer umgeformten dreidimensionalen Form und seiner Aktivierung und Aushärtung zu einer Fixierung der Schichten zueinander und der drapierten 3D-Kontur führt. Für den Preform-Prozess werden die Gewebestapel dann in ein Umformwerkzeug überführt und meist unter Druck durch Schließen des Umformwerkzeuges soweit der Kontur des späteren Formteiles angenähert und durch Aktivierung des Binders (Aufheizen und Abkühlen) ausgehärtet, dass das Faserhalbzeug endkonturnah in ein Werkzeug einer Presse zur Durchführung des RTM-Verfahrens selbst eingelegt werden kann. Je nach Bedarf wird das Faserhalbzeug noch nachgeschnitten oder an vorgegebenen Stellen ausgestanzt, um eine noch präzisere Kontur zu erreichen. Nach dem Einlegen des Faserhalbzeugs in das Werkzeug werden die Werkzeughälften geschlossen und das notwendige Harz in die Kavität des Werkzeuges injiziert, wobei das Harz die Faserstruktur des Faserhalbzeuges imprägniert, die Fasern einschließt und fest in die Harzmatrix einbindet. Nach dem Aushärten des Harzes kann das faserverstärkte Kunststoffbauteil entformt werden. Neben dem RTM-Verfahren selbst legt bereits die Herstellung eines Faserhalbzeuges den Grundstein für den Erfolg bei der Herstellung eines Kunststoffbauteiles. Es hat sich gezeigt, dass der Stand der Technik eine Vielzahl an Möglichkeiten zur Herstellung eines Vorformlings beschreibt, die sich aber in der Regel in manuellen oder automatisierten Herstellung eines möglichst ebenen Fasergewebestapels erschöpfen, das in einer Presse schließlich aus seiner 2D-Form in eine 3D-Form überführt wird. Dies kann in einem vorfixiertem (z. B. genäht) oder noch in einem flexiblen Zustand durchgeführt werden. Das Ziel ist es nach der Formgebung einen Vorformling zu erhalten, der eine ausreichende Eigensteifigkeit besitzt, um vollständig automatisiert und prozesssicher in das Werkzeug einer RTM-Presse eingelegt werden zu können oder auch bis zur weiteren Verwendung transportiert und abgestapelt werden kann. Zur Herstellung, Umformung und Fixierung des Vorformlings gibt es eine Vielzahl an Möglichkeiten im einschlägigen Stand der Technik.

Neben der Herstellung mittels RTM sind auch andere Herstellungsprozesse denkbar, die aus dem Legen von Fasergelegen mit oder ohne einem Harzinfusionsprozess, faserverstärkte Bauteile herstellen können. Insoweit wäre es denkbar, in einer Drapiervorrichtung eine endliche Anzahl von vorgeschnittenen Gewebefasern vorgegebener Breite in unterschiedlichen Ausrichtungen abzulegen und die Gewebefasern mit Harzzwischenlagen zu imprägnieren oder vorimprägniert abzulegen. Durch derartige Legeverfahren und die nachfolgende Umformung in der Drapiervorrichtung können ebenfalls hochsteife und faserverstärkte Bauteile auch ohne einen Injektionsprozess produziert werden.

Für den sogenannten Drapiervorgang und das -verfahren sind eine Vielzahl an unterschiedlichen Möglichkeiten bekannt. Diese lassen sich aber grundsätzlich in die Drapierung mit ein oder zwei starren Werkzeughälften unterteilen. In der Regel ist die aufnehmende Form eine starre Werkzeughälfte, die entweder mit einer weiteren starren Werkzeughälfte oder mit sequentiell verfahrbaren Einzelwerkzeugen (Drapierstempel) nacheinander zur zumindest konturnahen Umformung der Gewebelage zusammengeführt wird. Der Vorteil bei letzterer Möglichkeit besteht darin, dass damit versucht werden soll, eine Faltenbildung oder Faserverschiebungen in den einzelnen Schichten der Gewebelage zu verhindern. Dadurch können an schwer drapierbaren Bereichen definiert Zug- bzw. Schubbewegungen in die Gewebelage eingebracht werden, um Problemen um Radien, Biegungen, Kanten oder dergleichen vorzubeugen.

Dokument DE 27 01 480 offenbart, zum Beispiel, eine Vorrichtung und ein Verfahren zur Herstellung eines dreidimensionalen Vorformlings im Zuge der Herstellung von faserverstärkten Formteilen.

Die Aufgabe der Erfindung besteht darin, ein Verfahren und eine Vorrichtung anzugeben, mit dem gegenüber dem Stand der Technik aus, insbesondere zweidimensionalen, Fasergewebestapeln dreidimensionale Vorformlinge in besserer und in wiederholgenauer Qualität hergestellt werden können. Weiter soll es möglich sein, hochkomplexe Vorformlinge mit einer deutlich besseren Präzision aus einer Gewebelage herzustellen, was insbesondere die Faserorientierung und die Regelmäßigkeit der verwendeten Gewebelage betrifft, so dass auch bei komplexen Geometrien eine Faltenbildung und Verzug erfolgreich verhindert werden kann. Vorzugsweise sollen die durch Umformung gewonnenen Faserhalbzeuge in einem RTM-Prozess verwendet werden können, der sich insbesondere durch reproduzierbare Prozessparameter auszeichnet.

Die Lösung der Aufgabe besteht für das Verfahren nach den kennzeichnenden Merkmalen des Anspruches 1 darin, dass zur Umformung der Gewebelage an der Kontaktfläche zumindest ein erster und nachfolgend zumindest ein zweiter der Kontaktfläche zumindest ein erster und nachfolgend zumindest ein zweiter Drapierstempel in Drapierrichtung verfahren wird, wobei der Freiraum mit oder ohne Überlappung zu zumindest einer Kontaktfläche eines Drapierstempels mittels zumindest einem eigenständig bewegbarem oder mit einem mit zumindest einem Drapierstempel wirkverbundenem Zwischenhalter überbrückt wird und dass der zweite Drapierstempel zumindest teilweise während des Verfahrens in Drapierrichtung im Freiraum zwischen den Drapierstempeln bewegt wird, wobei er anschließend oder gleichzeitig winkelig oder im 90° Winkel zur Drapierrichtung derart verfahren wird, dass er die Gewebelage entlang der Kontur ausformt und den Freiraum verlässt.

Die Lösung der Aufgabe für die Vorrichtung besteht nach den Merkmalen des Anspruches 5 darin, dass ein Zwischenhalter zumindest zwischen einem ersten und einem zweiten Drapierstempel angeordnet ist, der den Freiraum mit oder ohne Überlappung zu zumindest einem Drapierstempel überbrückt, wobei zumindest einer der Drapierstempel winkelig zur Drapierrichtung beweglich angeordnet ist.

In vorteilhafter Weise ist es nun möglich, mit dem erfindungsgemäßen Verfahren und einer hierzu geeigneten aber auch eigenständig verwendbaren Vorrichtung an einen Vorformling angepasste Gewebelagen aus einem im Wesentlichen ebenem Zustand (2D) in eine komplexe dreidimensionale Form umzuformen und zu fixieren. Insbesondere ist von Vorteil, dass die Umformung schonend durchgeführt werden kann und Knicke, Falten und Stauchungen oder Verwerfungen der Gewebelage während der Umformung vermieden werden können.

Um die Umformung der Gewebelage in eine Kavitäten aufweisende Formschale zu verbessern, sind folgende Punkte zu beachten:
- es darf kein unzulässiger Zug auf das Gewebelage gelangen, da sich sonst die Struktur (Faserorientierung und Regelmäßigkeit) verziehen könnte oder die Gewebelage Risse bekommt.
- Es dürfen keine Faltenbildung, Überwerfungen oder Stauchungen beim Drapieren der Gewebelage in Bauteilvertiefungen entstehen.
- Nach Wunsch kann der Fasergewebestapel spannungsarm oder mit einer gezielt definierten Spannung fixiert werden.

Um das Bewegungsverhalten der Gewebelage während des Einbettens respektive während des Drapierens in die Formschale weiter zu verbessen ist es auch denkbar, dass auf der Seite der Formschale an vorgegebenen Stellen, vorzugsweise Vertiefungen, Reibungsmittel oder beispielsweise einfach nur Schaumstoffe angeordnet sind. Kommt die Gewebelage mit diesem in Kontakt wird er dort geklemmt oder mittels differenzierter Haftreibung mit der Bewegung des Drapierstempels mitgenommen und dadurch gespannt oder freier gehalten. Es ergeben sich also hinsichtlich der Ansteuerbarkeit folgende Vorteile: Angepasst an die Umformkontur respektive die Formschale können die Drapierwerkzeuge oder die Drapierstempel in vorteilhafter und beliebiger Reihenfolge an gesteuert werden. Hierzu kann mittels moderner Simulationsprogramme ein entsprechender Modus gefunden werden, der eine optimale Verschiebung oder Umformung von 2D-Schichten auf eine dreidimensionale Kontur ermöglicht.

Durch das zeitliche abfolgende Einfahren der Drapierstempel in die Drapierform mit daran angebrachten Zwischenhaltern, insbesondere einer vor- und/oder nacheilenden, winkelig angestellten, gebogenen, biegsamen und/oder federelastischen Ausführungsform, oder durch das Einfahren von Zwischenhaltern alleine, können Faltenwürfe in den Zwischenräumen bzw. Fugen an den Außenkanten der Drapierstempel verhindert werden. Dabei ist ein Drapierstempel im Wesentlichen dadurch definiert, dass er eine flächige dreidimensionale Teilnachbildung der Drapierform ausbildet, die ihm gegenüberliegt. Der Zwischenhalter zeichnet sich dadurch aus, dass er entweder an einem vorhergehenden Drapierstempel mitgeführt wird und zumindest teilweise die Fläche zwischen zwei Drapierstempel überbrückt und die Gewebelage dort faltenfrei fixiert. Vorzugsweise wird der zweite Drapierstempel bei parallelem Verfahrweg gegenüber dem ersten Drapierstempel zuerst mit dem Zwischenhalter des ersten Drapierstempels Kontakt finden und anschließend die Gewebelage anformen. Es ist auch denkbar, dass im Zuge des Eintauchens des zweiten Drapierstempels (durch paralleles Verfahren zum ersten Drapierstempel) der zweite Drapierstempel nach Kontakt mit dem Zwischenhalter, an diesem Entlang, im Wesentlichen quer zur Hauptbewegungsrichtung (Ein- und Ausfahren) verschoben wird. Vorzugsweise kann auch ein federelastischer, ein an einem Dämpfer und/oder ein an einer Feder angeordneter Zwischenhalter verwendet werden, der zumindest gegen Ende der Bewegung (alleine oder wirkverbunden mit einem Drapierstempel) in Drapierrichtung in seine Endlage (zur Nachbildung der Kontur der Drapierform) gedrückt wird.

Vorzugsweise sind die Stellglieder zum Verfahren der Drapierstempel als druck- oder wegsteuerbare Linearantriebe ausgeführt, beispielsweise Kolbenzylinderanordnungen oder Spindelantriebe.

Weitere vorteilhafte Maßnahmen und Ausgestaltungen des Gegenstandes der Erfindung gehen aus den Unteransprüchen und der folgenden Beschreibung mit der Zeichnung hervor. Die Vorrichtung ist insbesondere zur Durchführung des Verfahrens geeignet, kann aber auch ohne das Verfahren eigenständig betrieben werden.

Insbesondere ist es nun möglich, an zumindest einem ersten und/oder zweiten Drapierstempel ein Zwischenhalter mitfahrend oder eigenständig derart anzuordnen, das der Freiraum zwischen den beiden Drapierstempel zumindest teilweise überbrückt wird. Alternativ kann mittels einem frei beweglichen oder mit zumindest einem Drapierstempel wirkverbundenen Zwischenhalter die Gewebelage im Freiraum zwischen zwei oder mehreren Drapierstempeln (zumindest teilweise) niedergehalten werden. Insbesondere kann vorgesehen sein, dass an zumindest einem Drapierstempel zur Überbrückung des Freiraumes zwischen zweier Drapierstempel ein Zwischenhalter, vorzugsweise voraus- oder nacheilend gegenüber einem zweiten bewegten, aber noch nicht die Kontur nachbildendem Drapierstempel angeordnet ist.

Die folgenden Darstellungen sind nicht direkt als Einzelfalllösungen anzusehen, sondern enthalten in Teilen auch allgemeine Hinweise und Aufgabenlösungen.

Es zeigen:
- Figur 1: Die Nachteile des Standes der Technik bei einer herkömmlichen Drapiervorrichtung in Gegenüberstellung zur
- Figur 2: mit Darstellung eines Ausführungsbeispieles des erfindungsgemäßen Verfahrens und einer beispielhaften Vorrichtung, die Verwerfungen oder Überstülpungen in den Freiräumen zwischen zwei Drapierstempeln vermeidet,
- Figur 3: ein zweites Ausführungsbeispiel eines Zwischenhalters im Freiraum nach Figur 2,
- Figur 4: ein drittes Ausführungsbeispiel zweier Zwischenhalter im Freiraum nach Figur 2,
- Figur 5: ein viertes Ausführungsbeispiel zweier Zwischenhalter im Freiraum nach Figur 2,
- Figur 6: ein fünftes Ausführungsbeispiel zweier Zwischenhalter im Freiraum nach Figur 2,
- Figur 7: ein sechstes Ausführungsbeispiel eines verfahrbaren oder gedämpften Zwischenhalters im Freiraum,
- Figur 8: ein siebtes Ausführungsbeispiel eines Zwischenhalters im Freiraum mit einem elastischen Zwischenhalter, welcher zur Oberfläche der Gewebelage konvex gebogen ausgeführt ist und
- Figur 9: mit einem beispielhaften Verfahrensablauf unter Verwendung eines quer zur Drapierrichtung verfahrbaren Drapierstempels.

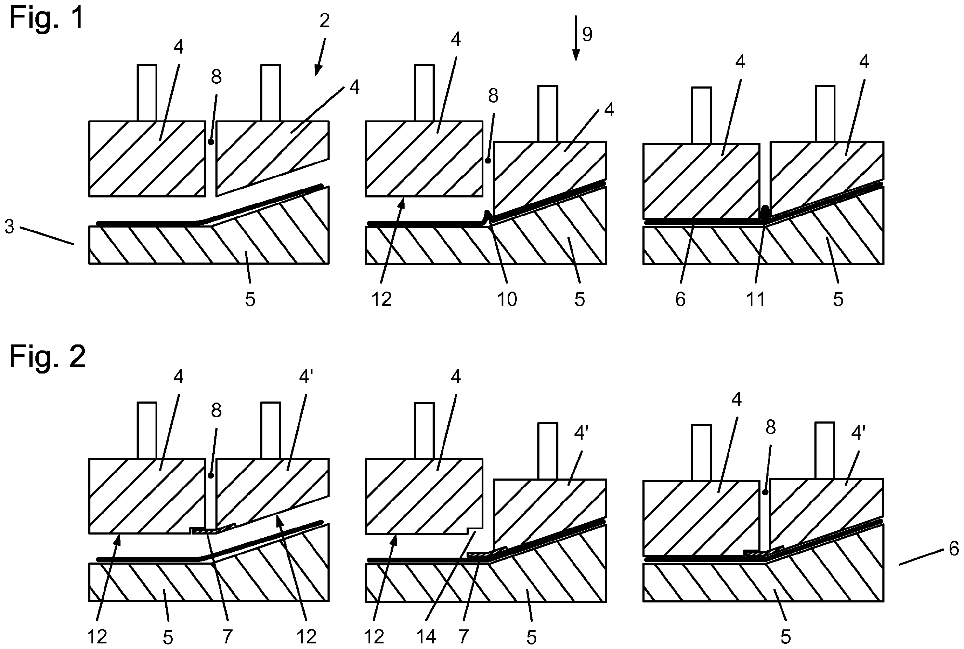

Nach Figur 1 bestehen die Nachteile des Standes der Technik bei einer herkömmlichen Drapiervorrichtung 2 dahingehend, dass bei komplexeren Konturen der Drapierform 5 die Gewebelage 3 nach dem Verfahren eines ersten Drapierstempels 4 in Drapierrichtung 9 und nachfolgender Kontaktnahme mit der Gewebelage 3 Verschiebungen 10 in der Gewebelage 3 auftreten können, wo noch keine Drapierstempel 4 positioniert worden sind. Im dargestellten Ablauf innerhalb der Figur 1 von links nach rechts sind beide Drapierstempel 4 in der linken Zeichnung noch nicht in Kontakt mit der Gewebelage 3. Zur Drapierung der Gewebelage 3 verfährt der rechte Drapierstempel 4 in der mittleren Figur in Drapierrichtung 9 und formt die Gewebelage 3 entsprechend der Kontur der Drapierform 5 um und klemmt diese fest. Es kann nun vorkommen, dass durch die Einklemmung der Gewebelage 3 zwischen dem ersten rechten Drapierstempel 4 und der Drapierform 5 eine Verschiebung 10 innerhalb der Gewebelage 3 im Bereich des nächsten linken Drapierstempels 4 auftritt. Insbesondere die Bereiche in oder um den Freiraum 8 zwischen den Drapierstempeln 4 herum ist für diesen Vorgang anfällig. Verfährt der zweite Drapierstempel 4 nun in Drapierrichtung 9 kann es zur Überstülpung oder einer Falte 11 kommen, die einem Ausschuss-Kriterium entsprechen.

Figur 2 zeigt nun die neue erfindungsgemäße Vorrichtung und den Ablauf des Verfahrens, bei dem zur Überbrückung des Freiraums 8 zwischen den Drapierstempeln 4 ein Zwischenhalter 7 verwendet wird, der an einem Drapierstempel 4' angeordnet ist. Im Folgenden wird das Bezugszeichen 4' für einen Drapierstempel 4 mit wirkverbundenem Zwischenhalter 7 verwendet. Vorzugsweise bildet der Zwischenhalter 7 die Kontur der Drapierform 5 im entsprechenden Bereich nach. Im vorliegenden Beispiel verfährt nun der rechte Drapierstempel 4' in Drapierrichtung 9 und formt die Gewebelage 3 entsprechend der Kontur der Kontaktfläche 12 und der zugehörigen Kontur der Drapierform 5 um. Der Zwischenhalter 7 überbrückt dabei, insbesondere im vorliegenden Ausführungsbeispiel, einen typischen Knick einer Kontur der Drapierform 5 und dem Freiraum 8. Der zweite Drapierstempel 4 links, der nachfolgend zum ersten rechten Drapierstempel 4 verfahren wird, formt die Gewebelage 3 im weiteren Konturverlauf um, ohne eine Verschiebung 10 oder eine Falte 11 in der Gewebelage 3 zu hinterlassen. Es ist somit auch nicht möglich, dass durch das Verfahren des zweiten Drapierstempels Teile der Gewebelage 3 in den Freiraum 8 zurückkehren. Vorzugsweise wird in der Kontaktfläche 12 des zweiten Drapierstempels 4 links ein Rücksprung 14 vorgesehen sein, in der der Zwischenhalter 7 unter Bildung einer entsprechenden und gleichmäßigen Gesamtkontaktfläche für die Gewebelage 3 verbleibt.

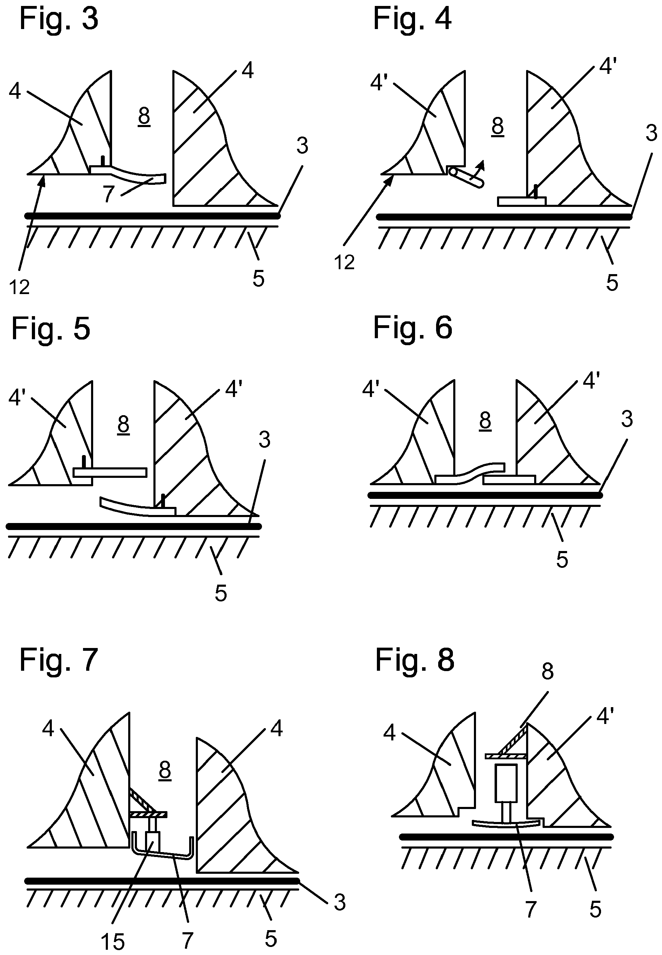

In den Figuren 3 bis 8 sind weitere sechs mögliche, aber die Lehre der Erfindung nicht beschränkende und insbesondere einzelne oder kombinierbare Ausführungsformen für einen oder mehrere Zwischenhalter 7 in einem Freiraum 8 dargestellt. Nach Figur 3 ist der Zwischenhalter 7 ein in Drapierrichtung 9 gebogen ausgeführtes Blech aus Metall, vorzugsweise Federblech, oder aus Kunststoff oder anderen resilienten Materialien. Der Zwischenhalter 7 kann mit einer ani-adhäsiven Schicht versehen sein. Davon unabhängig kann der Zwischenhalter 7 noch vor der Kontaktfläche 12 mit der Gewebelage 3 Kontakt aufnehmen. Durch diese Ausgestaltung werden Verwellungen oder Verschiebungen geglättet, bevor durch die Kontaktfläche 12 des Drapierstempels 4' eine großflächige Umformung oder Drapierung der Gewebelage 3 stattfindet. Gleichzeitig wird vermieden, dass durch die zuletzt genannte Umformung Teile der Gewebelage 3 zurück in den Freiraum 8 verschoben werden. Insbesondere ist bevorzugt, dass die (Kontakt-)Fläche des Zwischenhalters 7 mit der Gewebelage 3 kleiner ist als die Kontaktfläche 12 des wirkverbundenen Drapierstempels 4'. Nach Figur 4 ist der Zwischenhalter 7 für den Freiraum 8 zweigeteilt und an beiden den Freiraum 8 bildenden Drapierstempeln 4' angeordnet. Im Wesentlichen bevorzugt ist die Kontaktfläche 12 des Zwischenhalters 7 im Anschluss- respektive Übergangsbereich in einer Ebene mit der Kontaktfläche 12 des Drapierstempels 4', zumindest aber nach Umformung bzw. Drapierung der Gewebelage 3, außer die Kontur der Drapierform 5 gibt an dieser Stelle eine hiervon abweichende Kontur vor. Bei biegsamem Material des Zwischenhalters 7 kann nach Figur 5 vorgesehen sein, dass der zuerst mit der Gewebelage 3 Kontakt aufnehmenden Zwischenhalter 7 derart gebogen ausgeführt ist, dass er ausgehend von dem Drapierstempel 4' weniger bis keinen Kontakt mehr mit der Gewebelage 3 aufweist, wobei ein beim benachbarten Drapierstempel 4' angebrachter zweiter Zwischenhalter 7 den ersten Zwischenhalter 7 zu einer vorzugsweisen vollflächigen Kontaktaufnahme mit der Gewebelage 3 verbiegt oder gerade stellt, was in den vorherigem Beispiel durch den Drapierstempel 4 selbst durchgeführt wurde (Figur 2 oder Figur 3).

Um eine wesentlich gleichförmige Kontaktnahme im Freiraum 8 zu erhalten, kann dabei der zweite Zwischenhalter 7 beabstandet von der Kontaktfläche 12 angeordnet sein, wie in Figur 5 dargestellt und ausnahmsweise nicht bündig mit der Kontaktfläche 12 des Drapierstempels 4' sein. Alternativ kann wie nach Figur 6 der Zwischenhalter 7 hochflexibel ausgeführt sein. Die Begriffe flexibel, resilient oder biegsam sind in der Technik übliche Begriffe. Um eine unklare Definition zu vermeiden, sollen Materialien gewählt werden, die mehrere Herstellungszyklen eine wiederkehrende Biegsamkeit gewährleiten. Dabei soll das Material oder die Eigenschaften des Zwischenhalters 7 so gewählt werden, dass dieser die Gewebelage 3 stark genug an die Kontur der Drapierform 5 anpressen kann ohne es zu schädigen. Dabei soll der Druck des Anpressens und Umformens aber (außer in gezielten Ausnahmefällen) das Material der Gewebelage 3 nicht schädigen oder innerhalb der Gewebelage 3 nicht zu Verschiebungen/Verwerfungen führen.

Mit den Figuren 7 und 8 sind weitere Möglichkeiten eines einstellbaren, flexiblen, gedämpften oder selbst verfahrbaren Zwischenhalters 7 dargestellt. Hierzu kann nach Figur 7 der Zwischenhalter 7 an einem Dämpfer 15, einem Aktuator oder über eine Feder abgestützt sein und eigenständig oder am zweiten beweglichen Drapierstempel 4' vorlaufend zur Kontaktfläche 12 angeordnet sein.

Je nach Ausführungsform kann vorgesehen sein, dass die freien Enden des Zwischenhalters 7 und/oder die an Freiräume 8 grenzenden Drapierstempelkanten gegenüber der Gewebelage 3 abgerundet sind. Die in Rede stehende Überlappung durch den Zwischenhalter 7 zu den Drapierstempeln 4, 4' ist in nahezu allen Figuren (2, 3, 4, 5, 6, 8) dargestellt. Eine fehlende Überlappung ist zu finden in der Figur 5 (links) und der Figur 7.

Nach Figur 8 ist möglichst eine bevorzugte Ausführungsform, dass der Zwischenhalter 7, insbesondere zur Überbrückung einer den Freiraum 8 übergreifenden linearen Formgebung der Gewebelage 3 konvex gegenüber der Gewebelage 3 gekrümmt ist, wobei in diesem Falle zumindest einer der Drapierstempel 4, 4' im Zuge seiner Bewegung in Drapierrichtung 9 die Form des Zwischenhalters 7 gemäß der Endkontur der Drapierform 5 umformt. Es ist natürlich nachvollziehbar, dass nach Erwärmung und Aushärtung der Gewebelage 3 zu einem Vorformling 6 die Drapierstempel 4, 4' wieder in eine Ruhelage entgegengesetzt zur Drapierrichtung 9 verfahren werden.

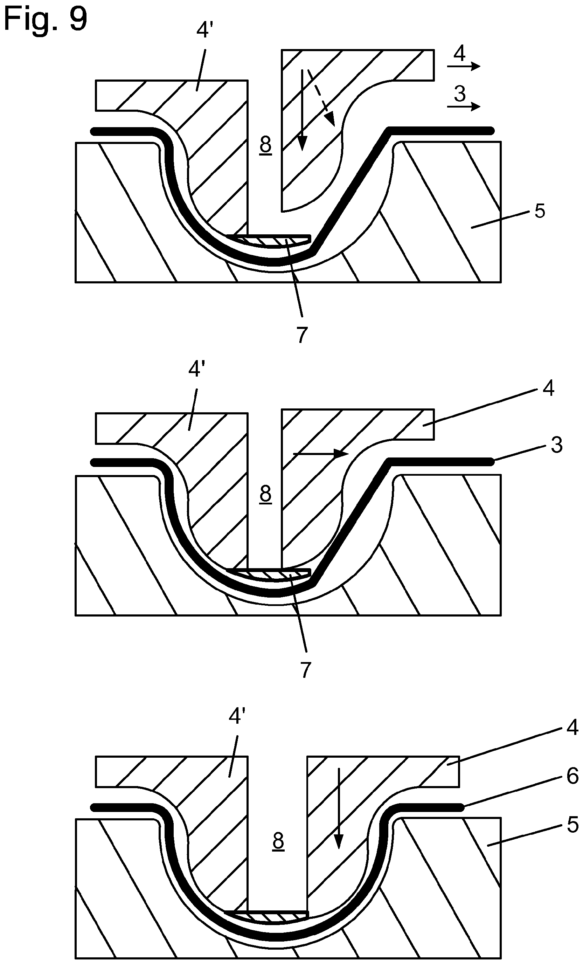

In Figur 9 ist noch ein mögliches Verfahren zur Drapierung einer Gewebelage 3 unter Zuhilfenahme eines Zwischenhalters 7 beschrieben. Hierzu ist zumindest einer der Drapierstempel 4 nicht nur in Drapierrichtung 9, sondern auch winkelig dazu bewegbar angeordnet.

Beispielhaft wird hierbei zuerst in eine Mulde der Drapierform 5 die Gewebelage 3 mit einem Drapierstempel 4 hineingedrückt, wobei vorzugsweise der Zwischenhalter 7 die Gewebelage 3 entlang der Kontur der Drapierform 5 in Richtung eines zweiten Drapierstempels 4' weiter ausformt. Der zweite Drapierstempel 4' verfährt in die tiefe Kontur der Drapierform 5 dabei über einen Weg, der zumindest teilweise den Freiraum 8 zwischen den Drapierstempeln 4 und 4' einnimmt, bis er kurz bevor oder bis er vorzugsweise Kontakt mit der Gewebelage 3 oder dem Zwischenhalter 7 aufnimmt und verfährt anschließend derart, dass er die Gewebelage 3 entlang der Kontur winkelig oder im 90° Winkel zur Drapierrichtung 9 respektive aus dem Freiraum 8 heraus ausformt. Anschließend kann er je nach Ausgestaltung noch eine Endformung in Richtung der Drapierrichtung 9 ausführen, wenn der zweite Drapierstempel 4' den Zwischenhalter 7 passiert hat, insbesondere um eine optimale Formkontur aus den Drapierstempeln 4, 4' und dem diese verbindenden Zwischenhalter 7 auszubilden.

**Bezugszeichenliste: P1428**

| | |
|---|---|
| 1. | 11. Falte |
| 2. Drapiervorrichtung | 12. Kontaktfläche |
| 3. Gewebelage | 13. |
| 4. Drapierstempel | 14. Rücksprung |
| 5. Drapierform | 15. Dämpfer |
| 6. Vorformling | |
| 7. Zwischenhalter | |
| 8. Freiraum | |
| 9. Drapierrichtung | |
| 10. Verschiebung | |

## Patentansprüche

1. Verfahren zur Herstellung eines dreidimensionalen Vorformlings (6) im Zuge der Herstellung von faserverstärkten Formteilen, wobei das Verfahren mit einer Drapiervorrichtung (2) ausgeführt wird, die zumindest umfasst eine Drapierform (5) für eine Gewebelage (3) und zur Drapierform (5) verfahrbare Drapierstempel (4, 4') mit Kontaktflächen (12) zur Umformung des Vorformlings (6) aus der Gewebelage (3) mittels der Drapiervorrichtung (2), wobei die Drapierstempel (4, 4') zumindest einen Freiraum (8) zueinander ausbilden, wobei zur Umformung der Gewebelage (3) an der Kontaktfläche (12) zumindest ein erster und nachfolgend zumindest ein zweiter Drapierstempel (4, 4') in Drapierrichtung (9) verfahren wird, wobei der Freiraum (8) mit oder ohne Überlappung zu zumindest einer Kontaktfläche (12) eines Drapierstempels (4, 4') mittels zumindest einem eigenständig bewegbarem oder mit einem mit zumindest einem Drapierstempel (4, 4') wirkverbundenem Zwischenhalter (7) überbrückt wird
und **dadurch gekennzeichnet, dass** der zweite Drapierstempel (4') zumindest teilweise während des Verfahrens in Drapierrichtung (9) im Freiraum (8) zwischen den Drapierstempeln (4 und 4') bewegt wird, wobei er anschließend oder gleichzeitig winkelig oder im 90° Winkel zur Drapierrichtung (9) derart verfahren wird, dass er die Gewebelage (3) entlang der Kontur ausformt und den Freiraum (8) verlässt.

2. Verfahren nach Anspruch 1, **dadurch gekennzeichnet, dass** zur Überbrückung des Freiraumes (8) zwischen zwei Drapierstempeln an jedem Drapierstempel (4, 4') ein Zwischenhalter (7) angeordnet ist.

3. Verfahren nach einem oder mehreren der vorhergehenden Ansprüche, **dadurch gekennzeichnet, dass** die Zwischenhalter (7) sich gegenseitig im Freiraum (8) überlappen.

4. Verfahren nach einem oder mehreren der vorhergehenden Ansprüche, **dadurch gekennzeichnet, dass** ein federelastischer, ein an einem Dämpfer (15) und/oder ein an einer Feder angeordneter Zwischenhalter (7) verwendet wird, der zumindest gegen Ende der Bewegung in Drapierrichtung (9) in seine Endlage gedrückt wird.

5. Vorrichtung zur Herstellung eines dreidimensionalen Vorformlings (6) im Zuge der Herstellung von faserverstärkten Formteilen, wobei die Vorrichtung eine Drapiervorrichtung (2) umfasst, die zumindest eine Drapierform (5) für eine Gewebelage (3) und zur Drapierform (5) verfahrbare Drapierstempel (4, 4') zur Ausbildung des Vorformlings (6) aus der Gewebelage(3) mittels der Drapiervorrichtung (2), wobei die Drapierstempel (4, 4') zumindest einen Freiraum (8) zueinander ausbilden, wobei ein Zwischenhalter (7) zumindest zwischen einem ersten und einem zweiten Drapierstempel (4, 4') angeordnet ist, der den Freiraum (8) mit oder ohne Überlappung zu zumindest einem Drapierstempel (4, 4') überbrückt, **dadurch gekennzeichnet, dass** zumindest einer der Drapierstempel (4, 4') winkelig zur Drapierrichtung (9) beweglich angeordnet ist.

6. Vorrichtung nach Anspruch 5, **dadurch gekennzeichnet, dass** der Zwischenhalter (7) in Drapierrichtung (9) dem Drapierstempel (4, 4') vor- oder nacheilend angeordnet ist.

7. Vorrichtung nach Anspruch 5, **dadurch gekennzeichnet, dass** der Zwischenhalter (7) aus Kunststoff, aus Metall, und/oder aus Federblech besteht.

8. Vorrichtung nach Anspruch 5, **dadurch gekennzeichnet, dass** der Zwischenhalter (7) mit einer anti-adhäsiven Schicht versehen ist.

9. Vorrichtung nach Anspruch 5, **dadurch gekennzeichnet, dass** die Kontaktfläche (12) eines Drapierstempels (4) zumindest zur teilweisen Aufnahme des Zwischenhalters (7), insbesondere mit Rücksprüngen (14), versehen ist.

10. Vorrichtung nach Anspruch 5, **dadurch gekennzeichnet, dass** der Zwischenhalter (7) die zugehörige Kontur der Drapierform (5) ausbildet.

11. Vorrichtung nach Anspruch 5 zur Durchführung des Verfahrens nach einem oder mehreren der Ansprüche 1 bis 4.

## Claims

1. Method for producing a three-dimensional preform (6) in the course of the production of fiber-reinforced molded parts, wherein the method is carried out with a draping device (2) comprising at least a draping mold (5) for a woven fabric layer (3) and draping stamps (4, 4') having contact surfaces (12) for reshaping the preform (6) from the woven fabric layer (3) by means of the draping device (2), which draping stamps can be moved relative to the draping mold (5), wherein the draping stamps (4, 4') form at least one clearance (8) with respect to each other, wherein at least one first and subsequently at least one second draping stamp (4, 4') are moved in the draping direction (9) in order to reshape the woven fabric layer (3) on the contact surface (12), wherein with or without overlap with respect to at least one contact surface (12) of a draping stamp (4, 4'), the clearance (8) is bridged by means of at least one independently movable or by means of an intermediate holder (7) that is operatively connected to at least one draping stamp (4, 4'), and
**characterized in that** the second draping stamp (4') is moved at least partially during the movement in the draping direction (9) in the clearance (8) between the draping stamps (4 and 4'), wherein it is moved subsequently or simultaneously angularly or at a 90° angle to the draping direction (9) such that it forms the woven fabric layer (3) along the contour and leaves the clearance (8).

2. Method according to claim 1 , **characterized in that** for bridging the clearance (8) between two draping stamps an intermediate holder (7) is arranged at each draping stamp (4, 4').

3. Method according to one or more of the preceding claims, **characterized in that** the intermediate holders (7) overlap one another in the clearance (8).

4. Method according to one or more of the preceding claims, **characterized in that** a spring-elastic intermediate holder (7), an intermediate holder (7) arranged on a damper (15) and/or an intermediate holder (7) arranged on a spring is used, which is pressed into its final position at least towards the end of the movement in the draping direction (9).

5. Device for producing a three-dimensional preform (6) in the course of the production of fiber-reinforced molded parts, wherein the device comprises a draping device (2) having at least one draping mold (5) for a fabric layer (3) and draping stamps (4, 4') which are movable relative to the draping mold (5) for forming the preform (6) from the fabric layer (3) by means of the draping device (2), wherein the draping stamps (4, 4') form at least one clearance (8) with respect to each other, wherein an intermediate holder (7) is arranged at least between a first and a second draping stamp (4, 4'), which bridges the clearance (8) with or without overlap with respect to at least one draping stamp (4, 4'), **characterized in that** at least one of the draping stamps (4, 4') is movably arranged at an angle to the draping direction (9).

6. Device according to claim 5, **characterized in that** the intermediate holder (7) is arranged to precede or trail the draping stamp (4, 4') in the draping direction (9).

7. Device according to claim 5, **characterized in that** the intermediate holder (7) consists of plastic, metal, and/or spring steel sheet.

8. Device according to claim 5, **characterized in that** the intermediate holder (7) is provided with an anti-adhesive layer.

9. Device according to claim 5, **characterized in that** the contact surface (12) of a draping stamp (4) is provided at least for partially receiving the intermediate holder (7), in particular with set-back portions (14).

10. Device according to claim 5, **characterized in that** the intermediate holder (7) forms the associated contour of the draping mold (5).

11. Device according to claim 5 for carrying out the method according to one or more of claims 1 to 4.

## Revendications

1. Procédé pour la fabrication d'une ébauche (6) en trois dimensions au cours de la fabrication de pièces moulées armées de fibres, lequel procédé est exécuté avec un dispositif de drapage (2) qui comprend au moins un moule de drapage (5) pour une couche de textile (3) et des poinçons de drapage (4, 4') pouvant se déplacer vers le moule de drapage (5) et possédant des surfaces de contact (12) pour mettre l'ébauche (6) en forme à partir de la couche de textile (3) au moyen du dispositif de drapage (2), les poinçons de drapage (4, 4') formant au moins un volume libre (8) l'un par rapport à l'autre, dans lequel au moins un premier poinçon de drapage puis au moins un deuxième (4, 4') sont déplacés dans le sens de drapage (9) pour mettre en forme la couche de textile (3) sur la surface de contact (12), dans lequel le volume libre (8) est couvert avec ou sans chevauchement avec au moins une surface de contact (12) d'un poinçon de drapage (4, 4') au moyen d'au moins un support intercalaire (7) déplaçable de façon indépendante ou en liaison active avec au moins un poinçon de drapage (4, 4'), et **caractérisé en ce que** le deuxième poinçon de drapage (4') est déplacé au moins en partie, pendant le déplacement dans le sens de drapage (9), dans le volume libre (8) entre les poinçons de drapage (4 et 4') et déplacé ensuite ou en même temps selon un angle ou à 90° par rapport au sens de drapage (9), de telle façon qu'il met en forme la couche de textile (3) le long du contour et sort du volume libre (8).

2. Procédé selon la revendication 1, **caractérisé en ce qu'**un support intercalaire (7) est disposé sur chaque poinçon de drapage (4, 4') pour couvrir le volume libre (8) entre deux poinçon de drapage.

3. Procédé selon une ou plusieurs des revendications précédentes, **caractérisé en ce que** les supports intercalaires (7) se chevauchent l'un l'autre dans le volume libre (8).

4. Procédé selon une ou plusieurs des revendications précédentes, **caractérisé en ce qu'**il met en oeuvre un support intercalaire (7) élastique comme un ressort, disposé sur un amortisseur (15) et/ou disposé sur un ressort, qui est poussé dans sa position de fin de course au moins vers la fin du mouvement dans le sens de drapage (9).

5. Dispositif pour la fabrication d'une ébauche (6) en trois dimensions au cours de la fabrication de pièces moulées armées de fibres, lequel dispositif comprend un dispositif de drapage (2) qui comprend au moins un moule de drapage (5) pour une couche de textile (3) et des poinçons de drapage (4, 4') pouvant se déplacer vers le moule de drapage (5) et possédant des surfaces de contact (12) pour mettre l'ébauche (6) en forme à partir de la couche de textile (3) au moyen du dispositif de drapage (2), les poinçons de drapage (4, 4') formant au moins un volume libre (8) l'un par rapport à l'autre, un support intercalaire (7) étant disposé au moins entre un premier poinçon de drapage (4, 4') et un deuxième et couvrant le volume libre (8) avec ou sans chevauchement avec au moins un poinçon de drapage (4, 4'), **caractérisé en ce qu'**au moins un des poinçons de drapage (4, 4') est disposé de façon à pouvoir se déplacer selon un angle par rapport au sens de drapage (9).

6. Dispositif selon la revendication 5, **caractérisé en ce que** le support intercalaire (7) est disposé de façon à se déplacer en avant ou en arrière des poinçons de drapage (4, 4') dans le sens de drapage (9).

7. Dispositif selon la revendication 5, **caractérisé en ce que** le support intercalaire (7) est fait de plastique, de métal et/ou de tôle à ressorts.

8. Dispositif selon la revendication 5, **caractérisé en ce que** le support intercalaire (7) est muni d'une couche antiadhésive.

9. Dispositif selon la revendication 5, **caractérisé en ce que** la surface de contact (12) d'un poinçons de drapage (4) est conformé pour recevoir au moins partiellement le support intercalaire (7), en particulier avec des épaulements (14).

10. Dispositif selon la revendication 5, **caractérisé en ce que** le support intercalaire (7) forme le contour correspondant du moule de drapage (5).

11. Dispositif selon la revendication 5 pour la mise en oeuvre du procédé selon une ou plusieurs des revendications 1 à 4.
